# FASCICULE DE BREVET EUROPEEN

(11) **EP 1 618 677 B1**
(45) Date de publication et mention de la délivrance du brevet: **14.07.2010**
(21) Numéro de dépôt: 04742621.8
(22) Date de dépôt: 30.04.2004
(51) Int. Cl.: H04B 3/54

(54) **PROCEDE DE TRANSMISSION DE DONNEES PAR COURANT PORTEUR**
VERFAHREN ZUM ÜBERTRAGEN VON DATEN MITTELS EINES TRÄGERSTROMS
METHOD FOR TRANSMITTING DATA BY MEANS OF A CARRIER CURRENT

(30) Priorité: 30.04.2003 FR 0305374
(43) Date de publication de la demande: 25.01.2006
(73) Titulaire: Spidcom Technologies, 92340 Bourg-La-Reine (FR)
(72) Inventeur: FRUHAUF, Joseph, 75012 Paris (FR); DUBOIS, Alexandre, F-75014 Paris (FR)
(74) Mandataire: Novagraaf Technologies
(86) Numéro de dépôt international: PCT/FR2004/001057
(87) Numéro de publication internationale: WO 2004/100392

(56) Documents cités:
- WO-A-96/24995
- US-A1- 2002 010 870
- US-A1- 2002 196 732
- US-B1- 6 249 213

## Description

La présente invention se rapporte au domaine de la transmission de données par courant porteur.

La présente invention se rapporte plus particulièrement à un procédé de transmission de données et à un modem mettant en oeuvre la technique OFDM (Orthogonal Frequency Division Multiplexing).

L'art antérieur connaît déjà, par la demande de brevet européen EP 1 011 235 (Nortel), un système de communication utilisant l'OFDM sur le courant porteur. Une gestion du bruit est ajoutée par « clipping » du signal entrant.

L'art antérieur connaît également, par la demande de brevet européen EP 1 014 640 (Nortel), un système de communication utilisant la technique OFDM. Des solutions sont apportées pour la synchronisation entre la base et les esclaves. Des symboles spéciaux sont rajoutés et une garde plus longue est utilisée.

Il est proposé, dans la demande de brevet PCT WO 01/95518 (Conexant), un procédé et un dispositif pour la modulation double-bande dans les systèmes de réseaux de courant porteur. Cette invention met en oeuvre la technique OFDM et permet de passer d'une bande à l'autre de manière statique.

Il est également proposé, dans la demande de brevet européen EP 1 018 826 (PolyTrax), un procédé pour la transmission de données sur courant porteur utilisant la technique OFDM. Dans l'invention présentée dans ce document, on améliore le signal soit en implémentant une fenêtre non rectangulaire sur le signal temporel (une porteuse sur deux est perdue), soit en implémentant un filtre dont les coefficients sont donnés.

L'art antérieur connaît également, par le brevet américain US 5 610 908 (BBC), un système permettant de réduire le « peak to mean ratio ».

L'art antérieur connaît également, par le brevet américain US 6 473 453 (Secrétariat d'Etat à la Défense Britannique), un système de communication à hautes fréquences mettant en oeuvre une solution de transmission de huit canaux multiplexés. Les huit canaux contiennent des signaux étalés en fréquences. Cette implémentation est intéressante pour la suppression des interférences liées aux bandes étroites.

L'art antérieur connaît également, par le brevet américain US 5 684 450 (Norweb), un réseau de transmission électrique utilisant la technique OFDM sur le courant porteur consistant à implémenter des filtres et une partie analogique pour l'injection d'un signal supérieur à 1 MHz. Une unité de terminaison pour le calcul de la bonne impédance est prévue.

L'art antérieur connaît également, par le brevet américain US 6 282 405 (Norweb), un réseau hybride de distribution d'électricité et de télécommunications mettant en oeuvre de façon très générale la technique OFDM.

L'art antérieur connaît également, par le brevet américain US 6 456 657 (Bell Canada), un système de bancs de filtres mettant en oeuvre la technique OFDM. Ce système permet de décomposer un système large bande, de multiplexer chacune des sous-bandes sur le canal et de reconstruire le signal en réception.

L'art antérieur connaît également, par la demande de brevet PCT WO 02/51089 (Conexant), un système se synchronisant sur des bruits périodiques en utilisant l'OFDM sur le courant porteur. Le but de cette invention est d'envoyer les symboles de données entre deux pics de bruit. L'art antérieur connait également, par le brevet américain US2002/196732 (STMicroelectronics), un procédé d'allocation de fréquences en modulation multi-porteuses orthogonales.

L'art antérieur connaît également, par le brevet américain US 6 373 377, une alimentation avec un couplage pour la transmission de données.

On connaît également dans l'état de la technique, le brevet américain US 6 249 213 (INTEL) « *Method for transmitting information over an alternating current power line through a plurality of frequency orthogonal subchannels* ». Un mode de réalisation de l'invention décrite dans ce brevet américain est un procédé pour la transmission d'informations à travers une ligne électrique à courant alternatif. Un canal de fréquence pour transmettre les informations est sélectionné et divisé en une pluralité de sous-canaux orthogonaux de fréquence. Chaque sous-canal de fréquence orthogonal est testé pour déterminer une valeur d'une transmission caractéristique, qui à son tour est utilisée pour déterminer une densité de bit de transmission pour le sous-canal orthogonal de fréquence. Les informations sont divisées en une pluralité de sous-blocs de données. Chaque sous-bloc de données correspond à un des canaux orthogonaux de fréquence, et la taille de chaque sous-bloc de données est déterminée en se basant sur la densité de bit de transmission correspondante. Les données de chaque sous-bloc sont modulées pour la transmission à travers le sous-canal orthogonal de fréquence correspondant. Chaque sous-bloc de données est transmis approximativement simultanément à travers le sous-canal orthogonal de fréquence correspondant.

Ce brevet américain US 6 249 213 d'Intel concerne bien la transmission de données sur une ligne électrique. Cependant, il ne mentionne à aucun moment les étapes nécessaires d'activation et d'allocation dynamiques de sous-bandes. Ces étapes sont très importantes dans le procédé selon la présente invention. De plus, le fait de réaliser des calculs sur chacune des sous-bandes de façon totalement indépendante des calculs réalisés sur les autres sous-bandes n'apparaît pas non plus dans l'art antérieur.

La présente invention entend remédier aux inconvénients de l'art antérieur en découpant la bande de fréquence en N sous-bandes, N étant un entier supérieur ou égal à deux, en effectuant des calculs sur chacune des sous-bandes qui sont indépendants des calculs réalisés sur les autres sous-bandes et en activant les sous-bandes de façon dynamique par un moyen logiciel. De plus, la synchronisation des symboles OFDM est rendue simple et peu coûteuse par l'utilisation de symboles OFDM de taille inférieure à 512 porteuses.

A cet effet, la présente invention concerne, dans son acception la plus générale, un procédé de transmission de données sur courant porteur utilisant une bande de fréquence consistant à :
- découper ladite bande de fréquence en N sous-bandes, N étant un entier supérieur ou égal à deux ;
- mettre en oeuvre une technique OFDM (Orthogonal Frequency Division Multiplexing) sur chacune des dites sous-bandes ;
- effectuer des opérations de calcul sur chacune des sous-bandes ;
   **caractérisé en ce que**
- les calculs réalisés sur chacune des sous-bandes sont indépendants des calculs réalisés sur les autres sous-bandes ;
- les dites sous-bandes sont activées et allouées de façon dynamique.

Selon un mode de mise en oeuvre particulier, le nombre N de sous-bandes est égal à 7.

Selon un mode de mise en oeuvre particulier, les symboles OFDM ont une taille égale à 256 porteuses.

Selon une variante avantageuse, les sous-bandes sont activées et allouées de façon dynamique par un moyen logiciel.

Selon une autre variante, les sous-bandes sont activées et allouées de façon dynamique par un moyen matériel.

L'invention se rapporte également à un équipement de modulation et démodulation pour la mise en oeuvre du procédé comprenant des moyens de filtrage, des moyens de calcul de FFT, des moyens de conversion Analogique/Numérique, des moyens d'amplification et des moyens d'activation et d'allocation des sous-bandes.

On comprendra mieux l'invention à l'aide de la description, faite ci-après à titre purement explicatif, d'un mode de réalisation de l'invention, en référence aux figures annexées :
- la figure 1 représente les principes généraux du procédé selon l'invention ;
- la figure 2 illustre la partie analogique de réception ;
- la figure 3 illustre une description des bandes ;
- la figure 4 représente le comportement du banc du filtre d'analyse ;
- la figure 5 représente le flot de synchronisation sur une sous-bande ;
- la figure 6 illustre le principe de corrélation du symbole de trame ;
- la figure 7 représente le comportement du bloc de synchronisation ;
- la figure 8 illustre le principe d'égalisation et de correction de l'erreur de fréquence ;
- la figure 9 représente le flot de démodulation sur une sous-bande ;
- la figure 10 illustre la configuration de la modulation sur une sous-bande ; et
- la figure 11 représente la partie analogique de transmission.

Le procédé selon la présente invention est basé sur l'utilisation d'une bande de fréquences pour des transmissions de données sur courant porteur. Un exemple non limitatif consiste à utiliser la bande de 1,6 MHz à 30 MHz. Le principe du procédé selon l'invention est de découper la bande en plusieurs sous bandes (deux ou plus), indépendantes et activées de façon dynamique, en utilisant, sur chacune d'elle, une technique OFDM.

La transmission sur courant porteur utilise des techniques de traitement du signal avancées en modulant des fréquences autorisées (par exemple de 1,6 à 30 MHz) sur les lignes d'alimentation électriques par couplage capacitif ou inductif. Le couplage permet de faire en sorte que d'une part, les signaux haute fréquence (supérieures à 50 Hz) et basse tension soient transposés sur les lignes d'alimentation électrique et que d'autre part, les signaux haute fréquence présents sur les câbles électriques soient récupérés dans le système.

Pour la réception, le signal modulé est récupéré sur la ligne électrique, il est filtré grossièrement (1,6 à 30 MHz) puis amplifié. Il est ensuite numérisé pour être analysé en fonction de la sous-bande qu'il occupe. Chaque sous-bande est traitée de la même façon l'une après l'autre. Le signal est synchronisé, multiplié pour en supprimer les erreurs de fréquence, puis passé dans le domaine fréquentiel. Là, on en tire quelques informations sur l'évolution du canal pour mieux corriger les déformations dues au canal puis on démodule. Enfin, le bloc de contrôle récupère les informations pour les transmettre aux couches supérieures.

Pour la transmission, le bloc de contrôle envoie les données sous-bandes après sous-bandes. Elles sont modulées puis passées dans le domaine temporel. Les informations sont ensuite translatées sur la sous-bande qu'elles sont supposées occuper par le filtre de synthèse. Là, le signal numérique est converti en signal analogique, filtré pour éliminer les composantes au delà de 1,6-30 MHz, puis amplifié. Enfin, le signal est transmis sur les fils électriques par couplage.

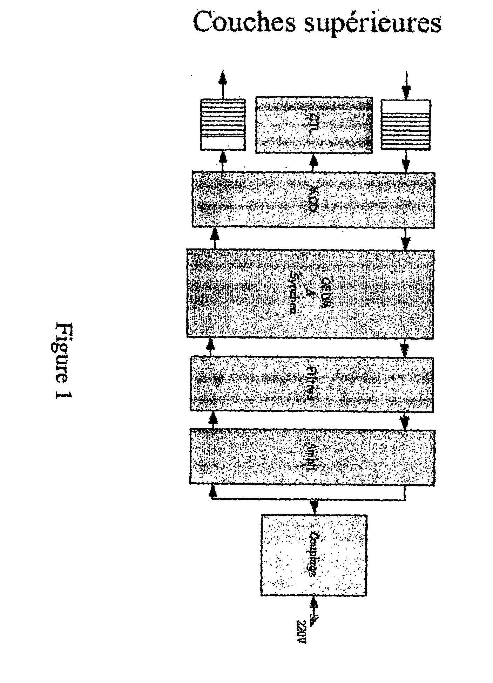

Les chaînes d'émission et de réception sont assez différentes et ne se retrouvent qu'au niveau du contrôle et du couplage, comme cela est représenté sur la figure 1. En voici la description détaillée :
**Réception - Partie analogique** La réception filtre les signaux haute fréquence pour ne garder que la bande utile (1,6 à 30 MHz dans notre exemple de réalisation de l'invention) à partir d'un condensateur en série pour les basses fréquences et d'un filtre passe-bas. Voici un exemple de caractéristiques du filtre :
   - Filtre elliptique d'ordre 8
   - Bande passante 0-30 MHz
   - Bande stop à -50dB
   - Ondulation dans la bande passante < 1dB
   - Transition bande passante -> Bande stop < 2MHz

Elle amplifie ensuite le signal avec un gain variable pour régler la dynamique du signal.

Enfin, un convertisseur analogique-numérique permet de numériser le signal.

Par exemple - 14 bits et 64 MHz

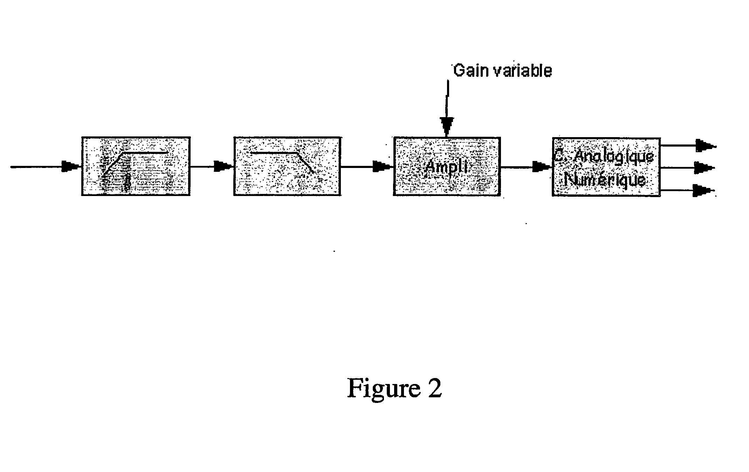

La figure 2 décrit la partie analogique de réception.

### Filtrage

La première étape du traitement numérique du signal est le filtrage qui est au centre de l'innovation de la présente invention. Dans cet exemple de réalisation de l'invention, on considèrera sept sous-bandes. Il est entendu que cet exemple ne saurait être limitatif. Le filtrage permet de récupérer sur 7 voies différentes, les signaux contenus dans les 7 sous-bandes suivantes (TBC) :
- Sous-Bande 1 : -2 -> 10 MHz
- Sous-Bande 2 . 2 -> 12 MHz
- Sous-Bande 3 : 6 -> 18 MHz
- Sous-Bande 4 : 10 -> 22 MHz
- Sous-Bande 5 . 14 -> 26 MHz
- Sous-Bande 6 . 18 -> 30 MHz
- Sous-Bande 7 : 22 -> 34 MHz

Le filtrage est en fait étroitement lié à la structure OFDM du signal. On se permet donc un chevauchement des différentes sous-bandes en supposant que les porteuses présentes dans les sous-bandes voisines ne seront pas utilisées. Cette astuce permet de réduire la complexité des filtres tout en conservant une grande efficacité spectrale. Voici les fréquences utiles dans chacune des sous-bandes .
- Sous-Bande 1 : 2 -> 6 MHz
- Sous-Bande 2 : 6 -> 10 MHz ,
- Sous-Bande 3 : 10 -> 14 MHz
- Sous-Bande 4 . 14 -> 18 MHz
- Sous-Bande 5 : 18 -> 22 MHz
- Sous-Bande 6 : 22 -> 26 MHz
- Sous-Bande 7 : 26 -> 30 MHz

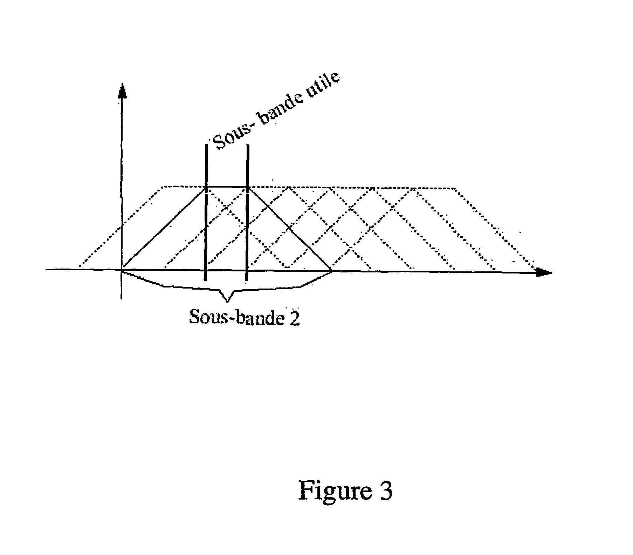

La figure 3 représente les différentes bandes.

Le filtrage est fait à l'aide d'un banc de filtres d'analyse. Cette structure permet d'isoler les signaux de chacune des 7 sous-bandes et de les transposer en bande de base. Huit échantillons de la bande globale permettent d'avoir un échantillon par sous-bande. Ils sont multiplexés en temps en sortie du filtre.

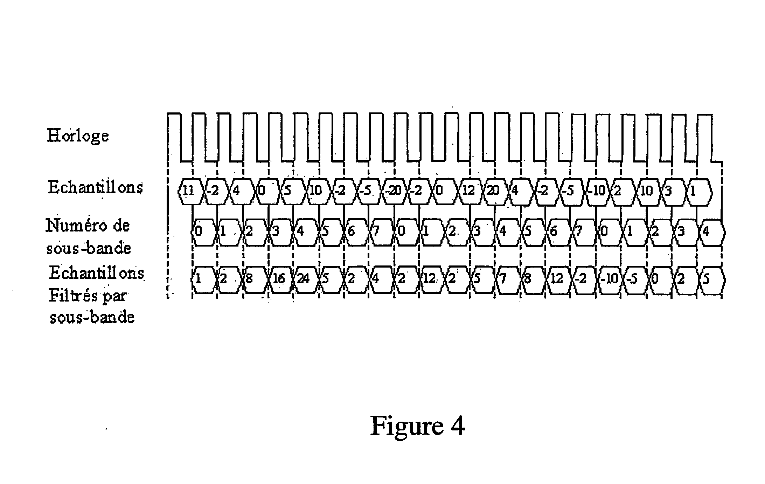

La figure 4 illustre le comportement du banc de filtre d'analyse.

### Synchronisation

La synchronisation entre un émetteur et un récepteur se fait sur chaque bande de façon indépendante. Les échantillons sont donc traités et stockés les uns après les autres en fonction de la sous-bande qu'il concerne. La synchronisation est basée sur la détection d'un symbole auto-corrélé et d'un intervalle de garde. Elle permet de placer la fenêtre de la transformée de Fourier pour passer dans le domaine fréquentiel.

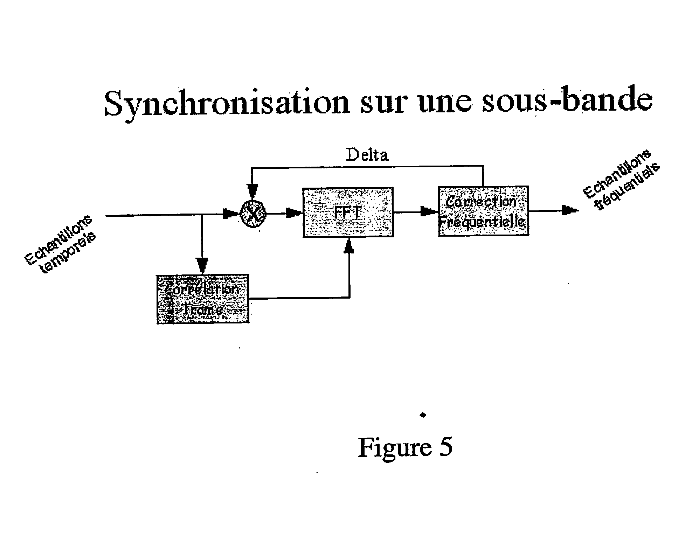

La figure 5 représente le flot de synchronisation sur une sous-bande.

Le symbole de synchronisation est envoyé en début de trame. Il contient une information connue répétée dans le temps. La corrélation sur la moitié du symbole permet de repérer ce symbole parmi les autres. Ensuite, à la fin du symbole, on utilise l'intervalle de garde qui est la recopie du début du symbole. La corrélation sur la longueur de la garde permet de trouver précisément la fenêtre de transformée de Fourier.

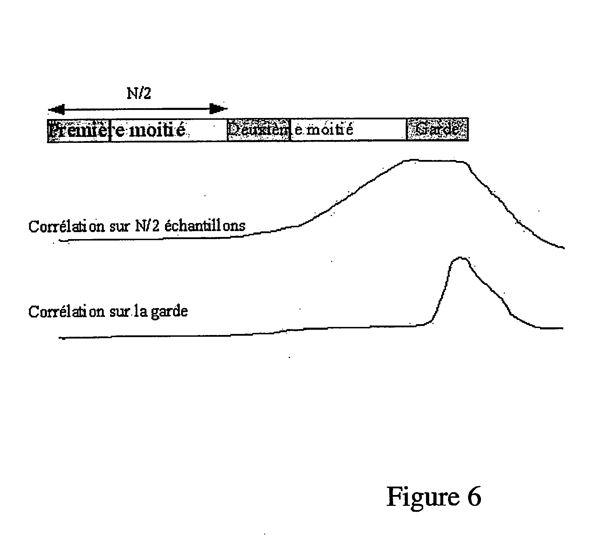

La figure 6 illustre le principe de corrélation du symbole de trame.

Une fois qu'un symbole entier est reçu et détecté, le bloc de synchronisation l'envoie à la transformée de Fourier après une multiplication complexe. Celle-ci permet une correction du signal temporel à partir des calculs faits plus en aval dans la réception. En début de trame, la correction est inactive.

À partir de cet endroit, les échantillons des différentes sous-bandes sont maintenant dissociés. Les sous-bandes sont traitées les unes après les autres, 256 échantillons par 256.

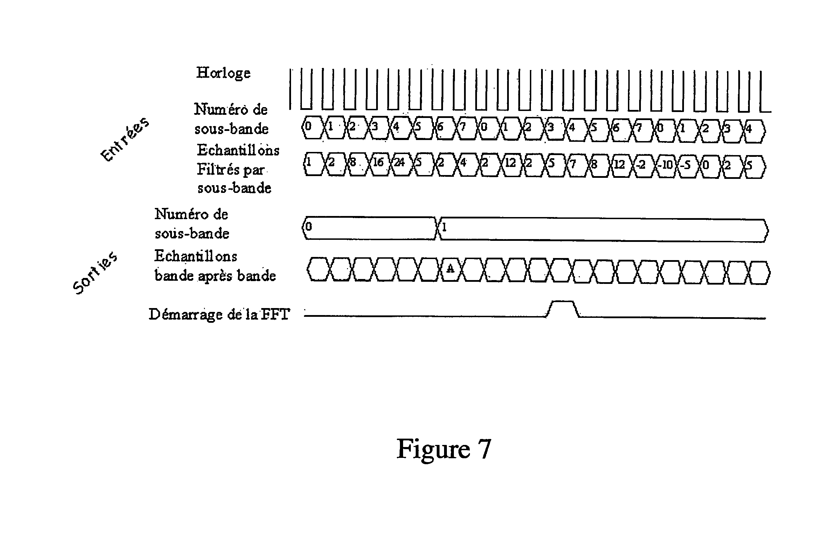

La figure 7 illustre le comportement du bloc de synchronisation.

### Transformée de Fourier

Dans un exemple de réalisation préféré, le signal OFDM dans chacune des sous-bandes est composé de 256 porteuses. Même si seules 128 porteuses sont utilisées pour respecter la structure des sous-bandes, il est nécessaire de réaliser une transformée de Fourier de 256 points. Pour 256 échantillons temporels reçus dans une sous-bande, elle calcule 256 échantillons fréquentiels correspondant aux 256 porteuses.

La structure utilisée est relativement classique, basée sur le principe du papillon. Pour 256 points dont 128 non-nuls, cette structure a été particulièrement optimisée en termes de surface et de vitesse. Elle permet le calcul avec une latence de 256 cycles environ.

### Correction fréquentielle

Le courant électrique, comme la plupart des media de communications, crée des erreurs sur les fréquences que l'on utilise. Il peut y avoir des erreurs en amplitude et en phase, ces deux paramètres dérivant dans le temps. Pour leur correction, la solution de la présente invention s'appuie sur l'utilisation de deux outils : un symbole de référence entièrement connu contenant toutes les porteuses utiles et envoyé à intervalle régulier, des porteuses de référence

(pilotes) dans chaque symbole de données. Leur emplacement est connu de l'émetteur et du récepteur.

Sur un symbole de référence, on estime la correction de phase et d'amplitude pour l'ensemble des porteuses.

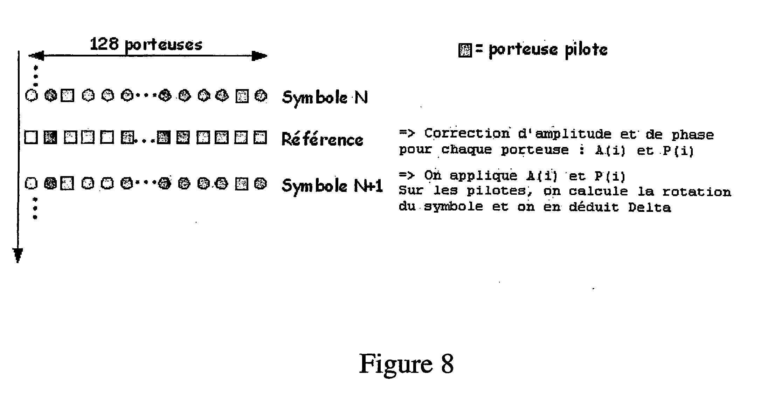

Sur les symboles suivants, on applique les valeurs trouvées ci-dessus et l'on regarde les porteuses pilotes. Pour ces deux-là, on calcule l'angle de rotation et l'on en déduit l'angle de rotation pour toutes les autres porteuses par régression linéaire. L'angle de rotation de la porteuse du milieu est appelé Delta et cet angle est appliqué sur le symbole suivant dans le domaine temporel. La figure 5 représente le flot de synchronisation sur une sous-bande et la figure 8 illustre le principe d'égalisation et de correction de l'erreur de fréquence.

### Démodulation

Les porteuses étant enfin corrigées, il est possible de les démoduler. Pour cela, l'émetteur et le récepteur se sont mis d'accord pour l'utilisation de modulations spécifiques pour chacun des 16 groupes de 8 porteuses par sous-bande. Sur chacun de ces groupes, on peut utiliser une modulation adaptée au niveau de bruit :
0 - pas de modulation
1 - modulation de phase (BPSK)
2 - modulation en quadrature de phase (QPSK)
4 - modulation en amplitude et en quadrature 16 (QAM16)
6 - modulation en amplitude et en quadrature 64 (QAM64)
8 - modulation en amplitude et en quadrature 256 (QAM256)

Les symboles de références ainsi que les porteuses pilotes ne sont pas démodulés. De plus, sur chacune des sous-bandes certaines porteuses sont interdites car utilisées par d'autres services prioritaires. Elles ne sont pas démodulées.

Le démodulateur est capable de calculer le rapport signal sur bruit sur chacune des porteuses. Ceci est fait en démodulant la porteuse à partir des valeurs du canal, en remodulant pour trouver les valeurs théoriques attendues et en faisant la différence.

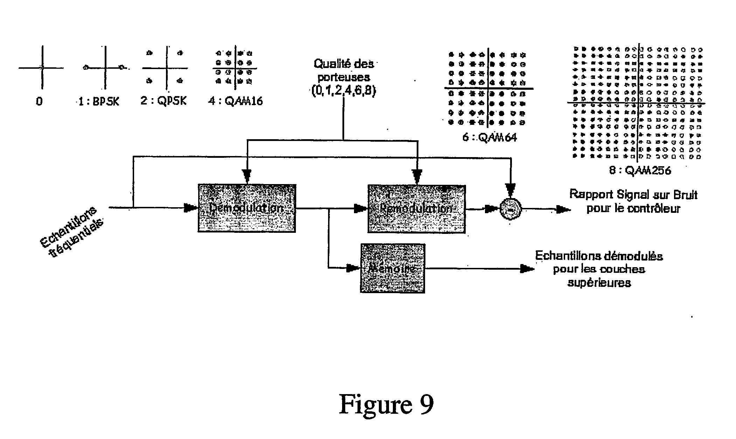

La figure 9 représente le flot de démodulation sur une sous-bande.

Toutes les valeurs démodulées sont stockées et l'information de démodulation est transmise au contrôleur. Toutes les informations de rapport signal sur bruit sont transmises au contrôleur.

### Contrôle

Le contrôle de la solution de transmission sur courant porteur se fait dans un microcontrôleur qui commande directement le modulateur pour l'émission et le démodulateur pour la réception. Le microcontrôleur traite les différentes sous-bandes les unes après les autres. En fonction de sa propre configuration logicielle (programme embarqué chargé dynamiquement), il active ou non les sous-bandes et leur alloue les différents flux de données.

Il ne gère pas les données en tant que telles, mais reçoit des informations de disponibilité des données et commande les modulateur et démodulateur en conséquence. De la même façon, il informe les couches supérieures (Codage correcteur d'erreur, couche MAC, etc.) qu'une donnée a été envoyée ou reçue.

En outre, le contrôleur est seul maître des modulations appliquées à chaque porteuse et du rapport signal sur bruit calculé. C'est lui qui prend la décision de changer la modulation.

### Émission - Modulation

Le modulateur est l'alter ego du démodulateur : on y retrouve des fonctionnalités similaires. I1 s'agit de moduler des données qui sont stockées, sur ordre du contrôleur. Les données peuvent être modulées par 0, 1, 2, 4, 6 ou 8 en fonction de la qualité. Sur chacune des porteuses, on peut interdire la modulation pour respecter les fréquences interdites (notion de notchs). Sur deux porteuses pilotes dans un symbole, on peut forcer la modulation avec une donnée connue.

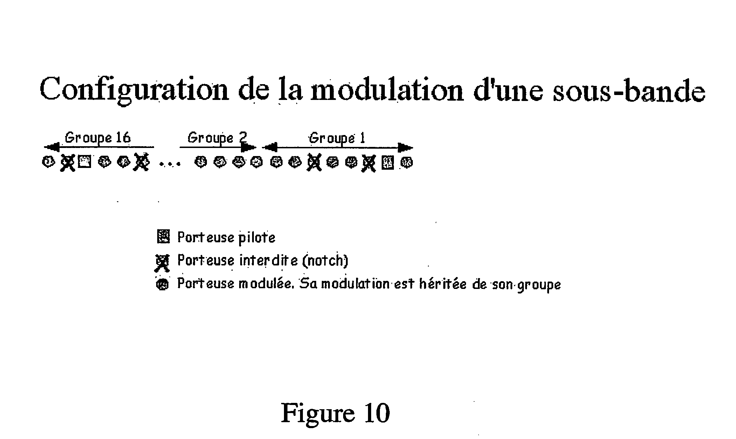

La figure 10 représente la configuration de la modulation sur une sous-bande.

Pour limiter la transmission d'information, seules les 128 porteuses actives de chacune des sous-bandes sont transmises. C'est en aval (en particulier dans la transformée de Fourier inverse) que se fera l'ajout des 128 autres porteuses nulles et la construction de 256 points par sous-bande.

### Multiplication

Le modulateur ne nécessite que 6 bits de dynamique pour la modulation. L'élément fréquentiel de chaque porteuse est multiplié par un nombre complexe et la dynamique est maintenant de 14 bits. Le nombre complexe utilisé pour la multiplication peut se décomposer en
- une amplitude pour s'adapter au mieux aux contraintes électromagnétiques,
- une phase pour éviter de saturer le calcul aval.

### Transformée de Fourier inverse

Cette étape permet de construire le signal temporel de 256 points à partir des 128 éléments fréquentiels utiles.

### Filtre de synthèse

Le filtre de synthèse permet la translation des différentes données correspondantes aux différentes sous-bandes dans les bandes de fréquences associées. La structure utilisée est duale du filtre d'analyse utilisé en réception : les données arrivent par bloc de 256 échantillons temporels, sous-bande après sous-bande. À la suite des 256 symboles, un intervalle de garde de 32 échantillons temporels est ajouté. Les données de chacune des sous-bandes ressortent entrelacées.

### Partie analogique

L'émission commence par convertir le signal numérique en analogique.

En sortie du convertisseur, le signal est filtré pour enlever les effets de la fréquence d'échantillonnage et éviter de générer des interférences en dehors de la bande allouée à la transmission sur courant porteur. Voici les caractéristiques du filtre :
- Filtre elliptique d'ordre 8
- Bande passante 0-30 MHz
- Bande stop à -50dB
- Ondulation dans la bande passante < 1dB
- Transition bande passante -> Bande stop < 2MHz

Ensuite, le signal est amplifié avant le couplage. L'amplification est fixe (gain 2).

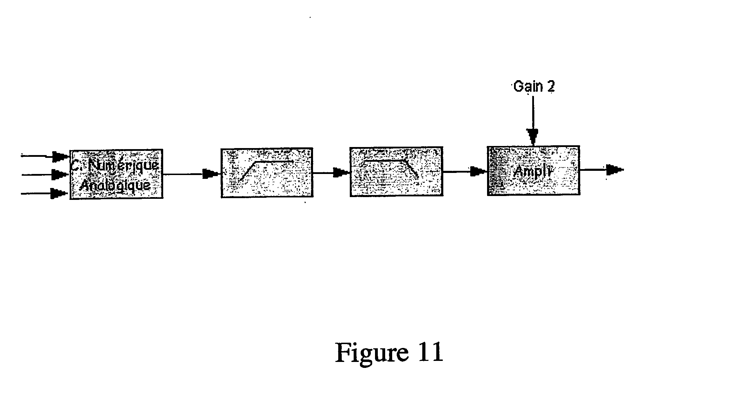

La figure 11 décrit la partie analogique de la transmission.

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé de transmission de données sur courant porteur utilisant une bande de fréquence consistant à :
• découper ladite bande de fréquence en N sous-bandes,
• étant un entier supérieur ou égal à deux ;
• mettre en oeuvre une technique OFDM (Orthogonal Frequency Division Multiplexing) sur chacune des dites sous-bandes, lesdites sous-bandes étant activées et allouées de façon dynamique ;
• effectuer des opérations de calcul sur chacune des sous-bandes ;
**caractérisé en ce que :**
• les calculs réalisés sur chacune des sous-bandes sont indépendants des calculs réalisés sur les autres sous-bandes ;
• ledit procédé comprend, en outre, l'utilisation d'un banc de filtres apte à découper ladite bande de fréquence en N sous-bandes.

2. Procédé de transmission de données sur courant porteur selon la revendication 1, **caractérisé en ce que** les filtres dudit banc ont des sous-bandes filtrées se chevauchant.

3. Procédé de transmission de données sur courant porteur selon la revendication 2, **caractérisé en ce que** les fréquences présentes dans lesdits chevauchements ne sont pas utilisées.

4. Procédé de transmission de données sur courant porteur selon la revendication 1, **caractérisé en ce que** le nombre N de sous-bandes est égal à 7.

5. Procédé de transmission de données sur courant porteur selon l'une des revendications 1 à 4, **caractérisé en ce que** les symboles OFDM ont une taille égale à 256 porteuses.

6. Procédé de transmission de données sur courant porteur selon l'une des revendications 1 à 5, **caractérisé en ce que** les sous-bandes sont activées et allouées de façon dynamique par un moyen logiciel.

7. Procédé de transmission de données sur courant porteur selon l'une des revendications 1 à 5, **caractérisé en ce que** les sous-bandes sont activées et allouées de façon dynamique par un moyen matériel.

8. Equipement de modulation et démodulation adapté pour la mise en oeuvre du procédé selon l'une quelconque des revendications précédentes comprenant des moyens de filtrage, des moyens de calcul de FFT, des moyens de conversion Analogique/Numérique, des moyens d'amplification et des moyens d'activation et d'allocation des sous-bandes.

## Claims

1. A method for transmitting data on a carrier current using a frequency band consisting in:
- cutting said frequency band into N sub-bands, N being an integer greater than or equal to two;
- implementing an OFDM (Orthogonal Frequency Division Multiplexing) technique on each one of said sub-bands, with said sub-bands being dynamically activated and allocated;
- making calculation operations on each one of said sub-bands;
**characterised in that**:
- the calculations made on each one of said sub-bands are independent of the calculations made on the other sub-bands;
- said method further includes the utilisation of a filter bank able to cut said frequency band into N sub-bands.

2. A method for transmitting data on a carrier current according to claim 1, **characterised in that** the filters of said bank have overlapping filtered sub-bands.

3. A method for transmitting data on a carrier current according to claim 2, **characterised in that** the frequencies existing in said overlaps are not used.

4. A method for transmitting data on a carrier current according to claim 1, **characterised in that** the number N of sub-bands is equal to 7.

5. A method for transmitting data on a carrier current according to one of claims 1 to 4, **characterised in that** the OFDM symbols have a size equal to 256 carriers.

6. A method for transmitting data on a carrier current according to one of claims 1 to 5, **characterised in that** the sub-bands are dynamically activated and allocated by software means.

7. A method for transmitting data on a carrier current according to one of claims 1 to 5, **characterised in that** the sub-bands are dynamically activated and allocated by hardware means.

8. A modulation and demodulation equipment adapted for the implementation of the method according to any one of the preceding claims including filtering means, FFT calculation means, Analogue/Digital conversion means, amplification means and sub-bands activation and allocation means.

## Patentansprüche

1. Verfahren zur Übertragung von Daten auf Trägerstrom mit Benutzung eines Frequenzbandes mit folgenden Teilern :
. Unterteilen des besagten Frequenzbandes in N Teilbänder, wobei N eine ganze Zahl von über oder gleich zwei ist;
. Einsatz einer OFDM Technik (Orthogonal Frequency Division Multiplexing) auf jedem der besagten Teilbänder, wobei die besagten Teilbänder dynamisch aktiviert und zugeordnet werden;
. Durchführung von Berechnungsvorgängen auf jedem der Teilbänder;
**Dadurch gekennzeichnet, daß:**
. die auf jedem der Teilbändern durchgeführten Berechnungsvorgänge unabhängig von den auf den anderen Teilbändern durchgeführten Berechnungsvorgängen sind;
. das besagte Verfahren ferner die Benutzung einer Filterbank umfaßt, die geeignet ist, das besagte Frequenzband in N Teilbänder zu unterteilen.

2. Verfahren zur Übertragung von Daten auf Trägerstrom nach Anspruch 1, **dadurch gekennzeichnet, daß** die Filter der besagten Bank sich überschneidende gefilterte Teilbänder haben.

3. Verfahren zur Übertragung von Daten auf Trägerstrom nach Anspruch 2, **dadurch gekennzeichnet, daß** die in den besagten Überschneidungen vorhandenen Frequenzen nicht genutzt werden.

4. Verfahren zur Übertragung von Daten auf Trägerstrom nach Anspruch 1, **dadurch gekennzeichnet, daß** die Anzahl N der Teilbänder gleich 7 ist.

5. Verfahren zur Übertragung von Daten auf Trägerstrom nach einem beliebigen der vorstehenden Ansprüche 1 bis 4, **dadurch gekennzeichnet, daß** die OFDM Symbole eine Größe von gleich 256 Trägern haben.

6. Verfahren zur Übertragung von Daten auf Trägerstrom nach einem beliebigen der vorstehenden Ansprüche 1 bis 5, **dadurch gekennzeichnet, daß** die Teilbänder aktiviert, und durch ein Softwaremittel dynamisch zugeordnet werden.

7. Verfahren zur Übertragung von Daten auf Trägerstrom nach einem beliebigen der vorstehenden Ansprüche 1 bis 5, **dadurch gekennzeichnet, daß** die Teilbänder aktiviert, und durch ein Hardwaremittel dynamisch zugeordnet werden.

8. Ausrüstung zur Modulation und Demodulation, die für den Einsatz des Verfahrens nach einem beliebigen der vorstehenden Ansprüche geeignet ist und Filtermittel, Mittel zur Berechnung von FFT (schnelle Fourier-Transformation), Mittel zur Analog-Digital-Wandlung, Verstärkungsmittel und Mittel zur Aktivierung und Zuordnung der Teilbänder umfaßt.
